# EUROPEAN PATENT SPECIFICATION

(11) **EP 2 877 645 B1**
(45) Date of publication and mention of the grant of the patent: **19.07.2017**
(21) Application number: 13777118.4
(22) Date of filing: 09.07.2013
(51) Int. Cl.: E04D 11/00, E04D 13/12, E04B 1/34

(54) **STRUCTURE TO ACHIEVE GREEN AREAS ON BUILDING ROOFS**
STRUKTUR ZUR ERZIELUNG VON GRÜNFLÄCHEN AUF GEBÄUDEDÄCHERN
STRUCTURE POUR OBTENIR DES ZONES DE VERDURE SUR DES TOITS DE BÂTIMENT

(30) Priority: 09.07.2012 IT BO20120370
(43) Date of publication of application: 03.06.2015
(73) Proprietor: Righini, Veronica, 40026 Imola (IT)
(72) Inventor: Righini, Veronica, 40026 Imola (IT)
(74) Representative: Fuochi, Riccardo
(86) International application number: PCT/IB2013/055641
(87) International publication number: WO 2014/009884

(56) References cited:
- WO-A-2011/033463
- DE-A1- 19 947 610
- DE-A1- 19 950 076
- US-B2- 6 688 050

## Description

### TECHNICAL FIELD OF THE INVENTION

The present invention concerns a structure to achieve green areas on building roofs.

More in particular, the present invention concerns a structure for achieving, on roofs of existing buildings or also newly built ones, green areas such as vegetable plots to be cultivated, gardens, and other similar recreational areas.

### STATE OF THE ART

It is known that some municipal administrations rent out state owned spaces and land intended for growing vegetables, in particular to pensioners or to other social categories.

Such spaces, often having a very limited surface for each user and set up in areas of the countryside that have been abandoned or marginalised, suffer from various problems and drawbacks.

Among the many problems, it is worth mentioning, for example, the lack of safety in garden areas, which are often broken into and subject to theft, the high density of the users in the spaces available, energy waste, and lack of respect of the municipal regulations, and others.

All these well known problems lead to poorly looked after spaces used for growing vegetables, and to a substantial under-exploitation of their potential. Moreover, the same location of the garden areas, often quite far from residential areas where the tenants live, leads, even more so, to such areas being poorly looked after and practically abandoned.

In addition to this it should be considered that, on the other hand, residential areas throughout the country are, except for rare exceptions, less and less provided with green areas such as gardens or vegetable plots, where people of all ages can go to relax and enjoy healthier and more relaxing life conditions.

The density of the buildings and of constructions in the city and in towns, indeed, does not make it possible to further provide enough areas intended for these purposes inside the residential areas.

Structures are known that make it possible to achieve surfaces on which grass lawns can be installed on roofs of buildings, which would otherwise not be exploited at all in terms of space.

Such structures are only suitable for containing layers of soil in which plants and flowers can be grown; these structures however do not make it possible to exploit the roofs of buildings in any other way, especially if these are roofs with sloping surfaces.

The document WO 2011/033463 A1 discloses a structure to achieve green areas on building roofs according to the preamble of claim 1.

### PURPOSES OF THE INVENTION

The technical task of the present invention is therefore that of improving the state of the art.

One purpose of the technical task of the present invention is to devise a structure to achieve green areas on building roofs that makes it possible to fully exploit the surfaces of the roofs themselves, also sloping ones, making them habitable for people.

Another purpose of the present invention is that of making a structure to achieve green areas on building roofs that is suitable for obtaining vegetable plots, gardens and the like to be used specifically by the tenants of the building on which the aforementioned structure is foreseen.

This task and these purposes are obtained with the structure to achieve green areas on building roofs according to the attached claim 1.

The structure according to the invention comprises a plurality of substantially horizontal platforms that are accessible to the users, elements for supporting the platforms in a substantially horizontal position, means for fixing the support elements to the surface of the roof of the building, and a plurality of fences foreseen at the perimeters of the platforms.

According to claim 2, at least one portion of each of the platforms is covered with a layer of soil that is suitable for growing plants.

According to claim 3, the platforms are divided into single closed portions that are each equipped with its own fence. Claims 4 to 13 refer to preferred and advantageous embodiments of the invention.

### BRIEF DESCRIPTION OF THE DRAWINGS.

The characteristics of the invention shall become clearer by a man skilled in the art from the following description and from the attached drawing tables, given as a non limiting example, in which:
figure 1 is an axonometric view of a residential building on the roof of which a structure according to the present invention is installed;
figure 2 is a detail of figure 1;
figure 3 is an axonometric detail view of another embodiment of the structure according to the invention, installed on the roof of a residential building;
figure 4 is an axonometric detail view of a single portion of the green area, intended for example to be used by a single tenant of the building;
figure 5 is an axonometric detail view of another embodiment of the structure according to the invention;
figure 6 is an axonometric view of the structure of figure 5 in a step of its construction;
figure 7 is an axonometric detail view of yet another embodiment of the structure according to the invention;
figure 8 is an axonometric detail view of a further embodiment of the structure according to the invention, particularly installed on a flat roof;
figure 9 is an axonometric detail view of yet another embodiment of the structure according to the invention;
figure 10 is an axonometric detail view of the access to the platforms of the structure;
figure 11 is a further axonometric detail view of the structure according to the invention;
figures 12, 13 are details of figure 11 in different construction steps of the structure according to the invention;
figure 14 is an axonometric detail view of another embodiment of the invention;
figure 15 is an axonometric view of the structure according to the invention installed on the roof of a building, in which the single portions allocated to the various apartments are highlighted.

### EMBODIMENTS OF THE INVENTION.

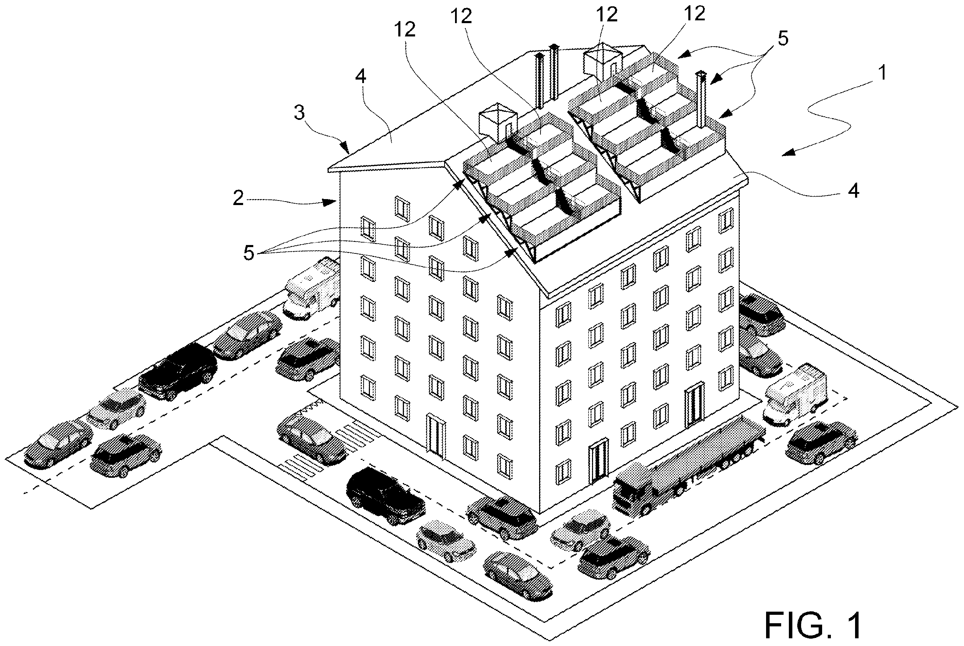

With reference to the attached figure 1, reference numeral 1 wholly indicates a structure to achieve green areas on building roofs according to the present invention.

By the expression "green areas" we mean, in the rest of the present description, areas in which there is vegetation, mainly and generally intended, for recreational activities, hobbies, relaxation and leisure, but also for other possible activities for which the structure according to the present invention is suitable, without any limitation.

Figure 1 illustrates a normal existing residential building 2 having a roof 3, for example of the type comprising sloping surfaces 4.

The roof 3, as shall be seen in the rest of the description, can also be of another type, without any limitation.

The structure 1 according to the present invention is fixed onto the roof 3, as shall become clearer in the rest of the description.

According to one aspect of the invention, the structure 1 comprises a plurality of platforms 5.

The platforms 5 are arranged substantially horizontal. As shall be seen in the rest of the description, the platforms 5 can be freely accessed by the users.

The structure 1 moreover comprises elements 6 for supporting the platforms 5, in the aforementioned substantially horizontal position.

The structure 1 moreover comprises means 7 for fixing the support elements 6 to the surface of the roof 3 of the building 2.

In this case, the surface of the roof 3 of the building 2, as mentioned, is made up of sloping surfaces 4.

In the embodiment of figure 1, the roof 3 comprises two sloping surfaces 4; the structure 1 according to the invention can however be also installed on roofs 3 of the type having four sloping surfaces 4, without any limitation.

Or, in other embodiments of the present invention, the surface of the roof 3 could be for example flat, as shall be seen in the rest of the description.

According to another aspect of the invention, the structure 1 also comprises a plurality of fences 8.

The fences 8 are foreseen at the perimeters of the platforms 5 of the structure 1.

The fences 8 can be for example made from metal, or made up of walls in reinforced concrete, or bricks, or other suitable construction materials.

According to yet another aspect of the invention, at least one portion of each of the platforms 5 is covered with a layer 9 of soil suitable for growing plants.

In this way, grass can be planted on the layer 9 of soil, or plants and vegetables can be grown, making an actual vegetable plot, or again small trees can be planted.

The thickness of the layer 9 of soil, its positioning in the platform 5, and other further characteristics depending upon the specific application requirements can of course be extremely variable, without limiting the purposes of the present invention.

In the embodiment of the structure 1 applied on a building 2 with roof 3 having a sloping surface 4, the support elements 6 of the platforms 5 comprise lattice girders 10.

The lattice girders 10 can be made from a metal material - for example steel, aluminium - or from wood, or again from any other material that is suitable for this type of application.

The detailed design of the lattice girders 10 for supporting the platforms 5 does not specifically constitute object of the present invention: these are of course normal calculating and sizing activities which are possible for a man skilled in the art of the construction field.

The means 7 for fixing the support elements 6 - or rather of the lattice girders 10 - to the sloping surfaces 4 of the roof 3 can be of various types.

Only to mention some examples, the aforementioned fixing means 7 can be made up of plates to be bolted into suitably selected areas of the roof 3. Such areas can be identified, for example, by removing some of the roof tiles, if present. In general, the fixing of the support elements 6 of the platforms 5 to the surface of the roof 3 can be carried out in any way known in the field of construction, which provides the necessary guarantees of suitability and conformity with the static safety standards in buildings, seismic standards, and whatever else.

In some embodiments, the support elements 6 can be made directly in reinforced concrete - or other similar construction materials - directly by the building constructor.

Or, portions of masonry, or reinforced concrete, can be made that rise up from the aforementioned areas of the roof 3 so as to create a base or predisposition for the installation of the structure according to the present invention.

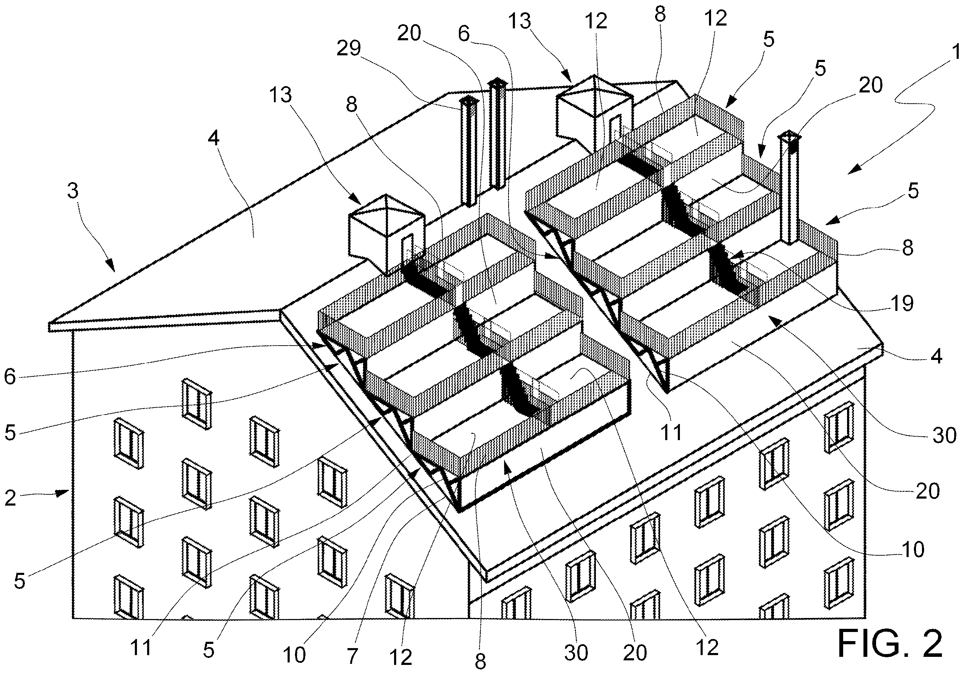

In figure 2 - which is a detail of figure 1 - an embodiment of the structure 1 is illustrated according to the invention in which only one of the sloping surfaces 4 of the roof 3 is involved in the installation of the structure 1 itself.

In this embodiment, the platforms 5 are positioned at different heights.

More in detail, the platforms 5 are arranged like terraces or steps for going down along the sloping surface 4.

Since, as already mentioned, we are considering a roof 3 with sloping surfaces 4, the lattice girders 10 comprise respective inclined bases 11 for fixing to the surfaces of the sloping surfaces 4 themselves. According to one important aspect of the present invention, the platforms 5 of the structure 1 are divided into single portions 12.

The single portions 12 are closed and each one is provided with its own fence 8, with an access gate.

Fences 8 of the single portions 12 can be made in metal, or in masonry, reinforced concrete or other suitable construction materials, just like the outer fences 8 of the platforms 5.

The portions 12 can make up, for example, single private areas that are specifically assigned to tenants or groups of tenants of the building.

The portions 12 can be defined naturally also according to different criteria, without any limitation.

For example, in the embodiment of figure 2 the platforms 5 are divided into two groups of single portions 12, in which each group corresponds to a certain column of the building, i.e. a certain row of apartments below.

Therefore, each portion 12 can constitute an actual add-on of a respective apartment present in the building.

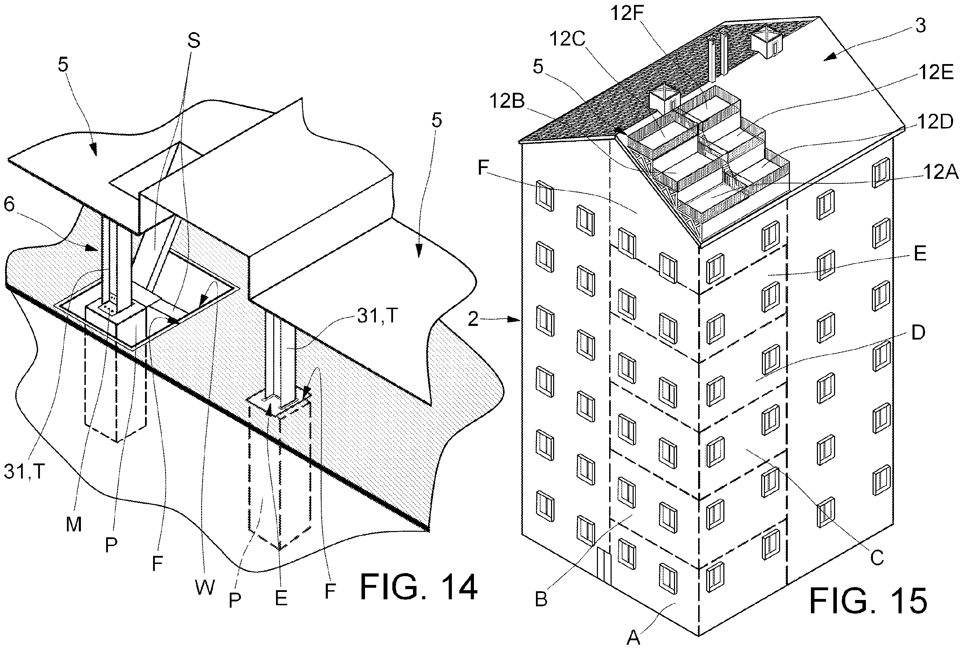

With particular reference to this aspect, figure 15, as a clarifying example, illustrates a building 2 highlighting, with a broken line, the apartments A-F of a same column, and the corresponding portions 12A-12F of the platforms 5.

As can be observed, in the area of the roof 4 that rises above the column of six apartments A-F, six portions 12A-12F are formed adjacently with the same dimensions, each belonging to the respective apartment. Such a division can be carried out on the entire surface of the platform 5, of course with roofs 4 of any kind.

All the apartments of the building 2, therefore, can have their own pertinent portion 12A-12F.

For example, with apartments A-F having a surface of around 100 m², six portions 12A-12F of around 15 m² each can be formed.

According to yet another aspect of the present invention, the structure 1 comprises at least one access point 13 for the users to get to the platforms 5.

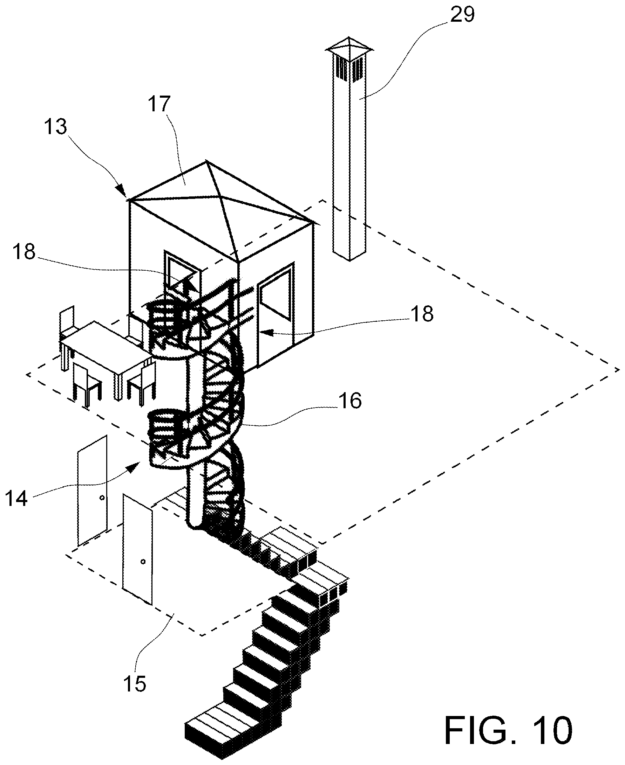

One example of such an access 13 is illustrated in detail in figure 10.

As can be seen, in the embodiment of figure 2 there are two access points 13, for example, because in the building there are two separate staircases.

Each of the access points 13 can indeed be connected to the stairwell 14, as illustrated in figure 10, or to the lift shaft, or again to some other area of the building 2.

For example, the access point 13 can also be connected to outer staircases of the building if present, for example fire escape staircases or the like.

In particular, in the case of connections to a stairwell 14 - see figure 10 - from the stair-landing 15 of the last floor a staircase 16 rises, for example a spiral staircase or the like, which connects to a small cabin 17 positioned on the surface of the roof 3, which has one or more exit doors 18 for accessing the respective platform 5, through a certain path 19 that is provided with suitable fences 8.

The structure 1 can also comprise at least one covering panel 20 of the support elements 6 of the platforms 5. More in detail, in the embodiment of figure 2 there are covering panels 20 on all the support elements 6 of the platforms 5 facing laterally with respect to the building 2.

The covering panels 20 are suitable for giving at least one of the sides of the structure 1 an appearance that is similar to that of the facades of the building 2.

For example, the panel 20 can be painted with the same colour with which the facade of the building 2 is painted, so as to give an impression of uniformity having a pleasant appearance.

In other embodiments, the panel 20 can be made so as to give the structure a different appearance, for example a verdant appearance, or other pleasant appearance.

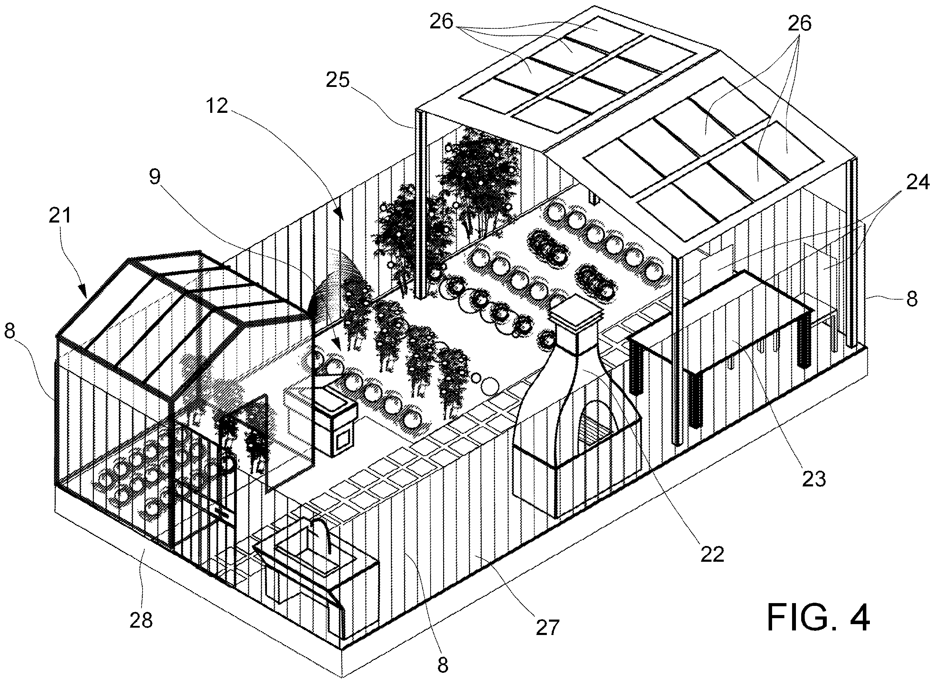

In the detail of figure 4, only as an example embodiment, a single portion 12 of one of the platforms 5 of the structure 1 is illustrated according to the invention.

In the portion 12 it can be foreseen for there to be, in at least one portion thereof, a layer 9 of soil that is intended for growing plants, vegetables, fruit, and more, a greenhouse 21, a barbecue 22, table 23 and chair 24, a veranda 25 with photovoltaic panels 26 installed on the roof.

It should be reminded that this list of elements foreseen in the single portion 12 is provided merely as an example: various other types of services and/or installations that are useful for achieving a recreational green area can be foreseen, for example an installation for irrigating the layer of soil 9 that is connected to the water mains of the building 2, a installation for collecting rainwater, and again other services, which are useful for comfortably maximising the portion 12 of platform.

Of course, the single portion 12 can be personalised at discretion of the user/owner.

As visible in figure 4, each of the portions 12 - or each platform 5 of the structure 1 - comprises a flat base 27 with side edges 28 that are suitable for containing the layer of soil 9, preventing it from accidentally coming out.

The flat base 27 with side edges 28 can be made for example in sheet metal, or in wood, or in plastic material.

The flat base 27 can be for example waterproof so as to prevent irrigation or rain water from falling.

The flat base 27 is fixed directly to the support elements 6 with means that are known in the field, for example with bolts.

On the flat base 27 other elements can also be installed for increasing comfort, such as lawns of synthetic grass and the like.

An external net can be foreseen, with sufficient height, for protecting against the falling of objects and/or dirt from the platforms 5 of the structure.

The chimneys 29 of the building 2 can be, if necessary, raised with respect to the original heights, so as to keep the smoke away from the platforms 5.

According to another important aspect of the present invention, the platforms 5 of the structure 1 comprise single prefabricated modules 30 that can be installed autonomously.

The single modules 30 can be made up, in relation to the specific requirements, of single portions 12 or of groups of portions 12, for example two, three portions 12 together, arranged on a same floor.

Advantageously, the single modules 30 can be installed or removed independently from one another, so as to allow the structure 1 to be fully personalised in relation to the different requirements of the tenants of the building 2.

The single modules 30 can be completely or partially prefabricated so as to make their installation as fast as possible.

It is worth indicating that the installation of the structure 1 according to the invention can occur almost completely from outside the building 2 - apart from possibly the setting up of the access point 13 from the stairwell 14 or from the lift shaft - thus minimising the disturbance to the tenants.

Yet another interesting aspect of the present invention is that the presence of the structure 1 on the roof 3 of the building makes it possible to carry out, with greater speed and simplicity, checking or maintenance operations on the cover, without necessarily requiring specialised workers.

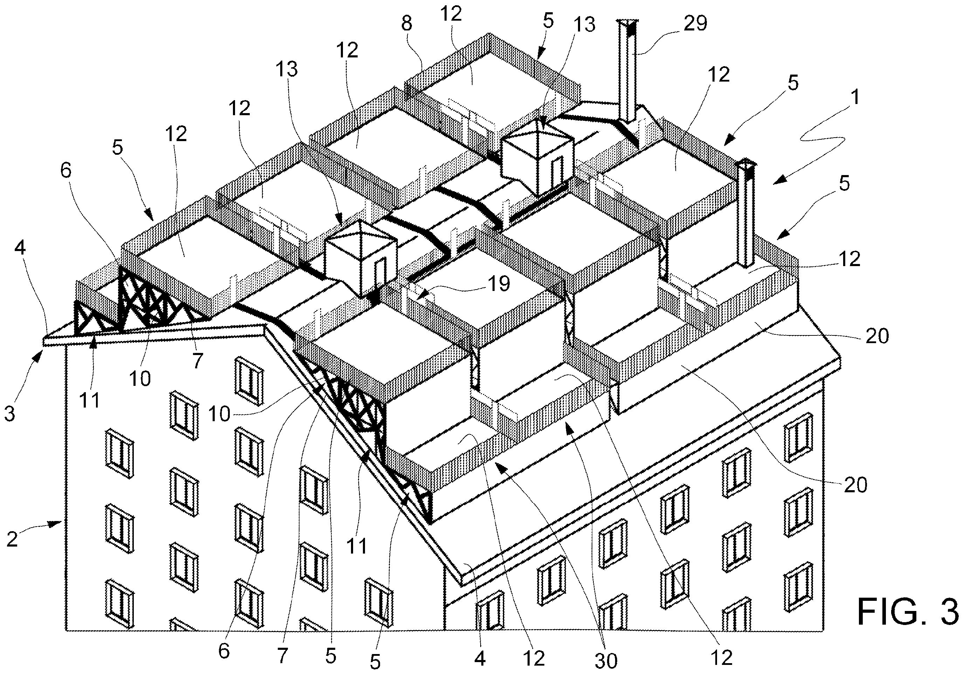

Figure 3 illustrates another embodiment of the structure 1 according to the present invention.

This embodiment is different from that illustrated in figures 1,2 for the fact that the platforms 5 are present on both sloping surfaces 4 of the roof 3. Moreover, it is foreseen for the platforms 5 to be divided into a smaller number of portions 12.

Moreover some portions 12 - those positioned at a greater height - have a surface that is greater with respect to the others, according to a different criterion of dividing the available surface.

The single portions 12 can be set up like in the example of figure 4.

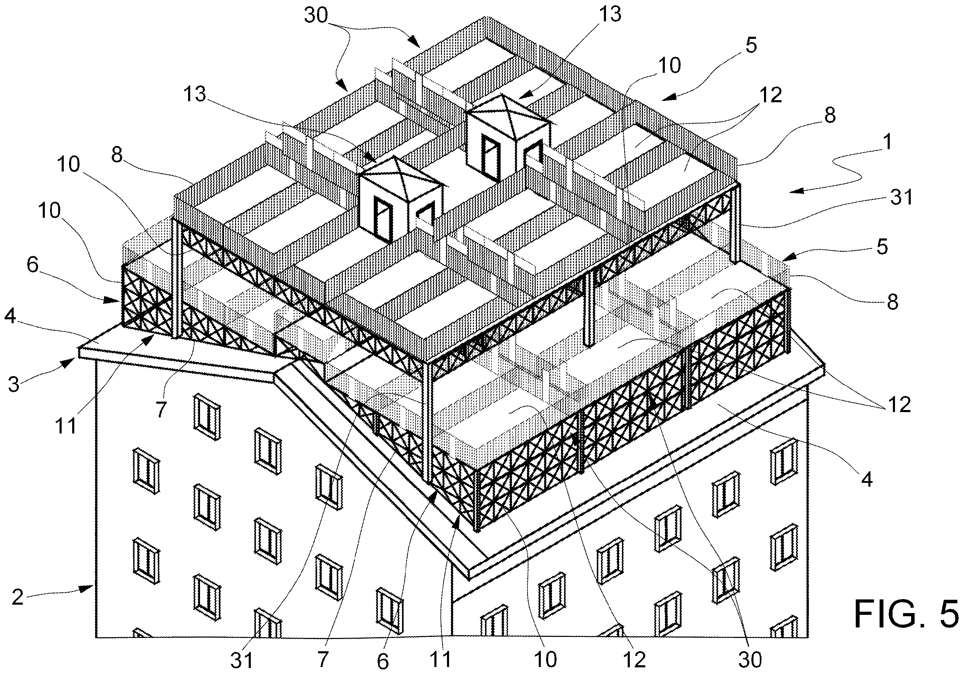

Another embodiment of the structure according to the present invention is illustrated in figure 5.

In this embodiment, one of the platforms 5 is completely positioned above another platform 5.

In other words, the two platforms 5 that form the structure are arranged on two floors that are on top of one another.

This means that some of the single portions 12 are completely on top of other portions 12.

In this embodiment, the support elements 6 comprise lattice girders 10 that support the lower platform 5, and also columns 31 that support the upper platform 5. The columns 31 are directly connected to the surface of the roof 3.

More in detail, the columns 31 can be connected to and/or placed over the load-bearing columns of the building, or the load-bearing walls, or over structures that are directly connected to the load-bearing columns or to the load-bearing walls.

The columns 31 can be reciprocally connected by peripheral reinforcement lattice girders 10, that define the upper platform 5.

The access points 13 to the platforms 5 are made, in this embodiment, with two floors: in other words, one same cabin 17 comprises two doors 18, one for each platform, on top of one another.

In each of the platforms 5, the various portions 12 can be accessed through suitable transverse or longitudinal paths 19, which are delimited by the fences 8.

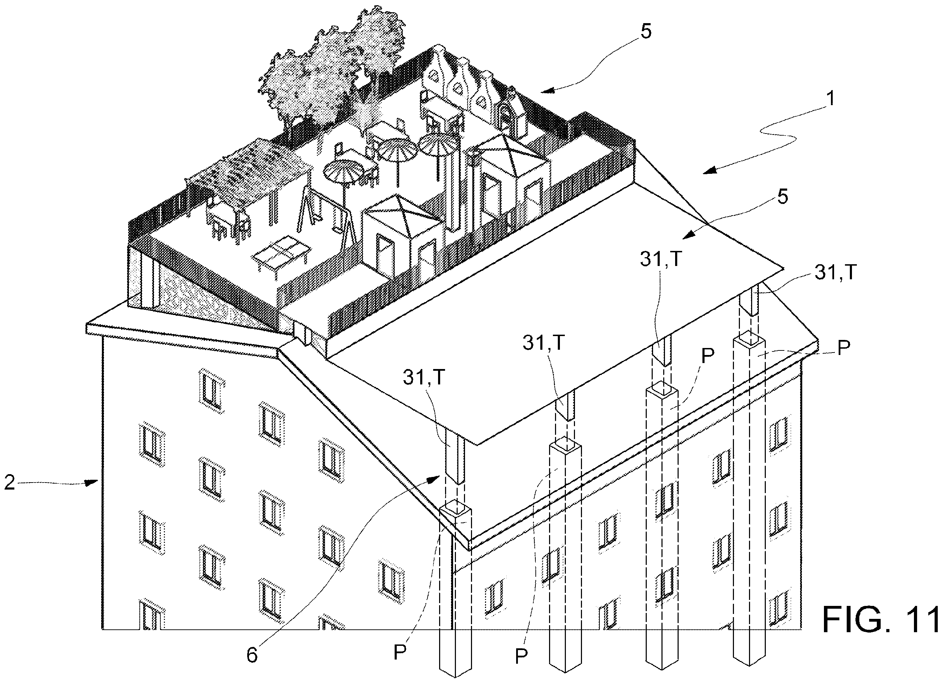

With particular reference to the connection of the columns 31 or beams that support the platforms 5 to the load-bearing columns of the building, the structure 1 according to the invention can be made in the illustrated manner, in particular, in figures 11, 12 and 13.

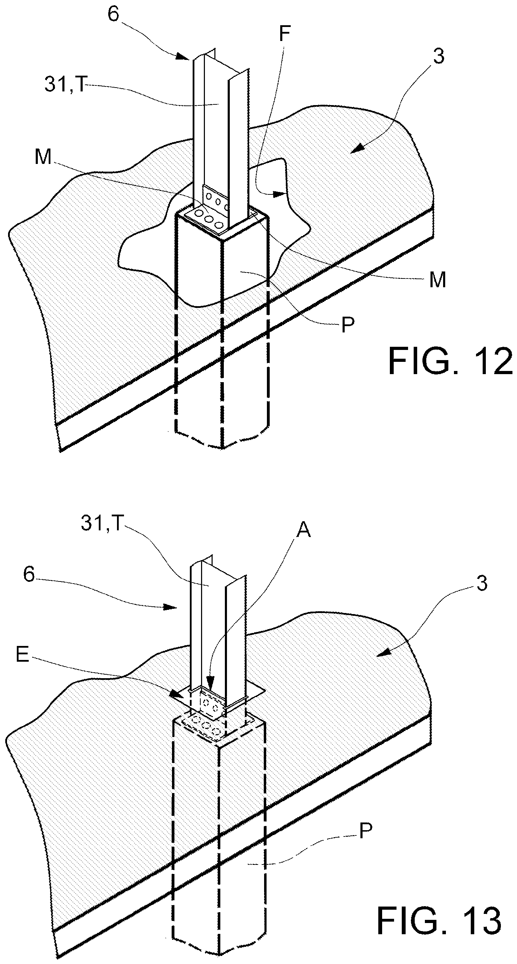

According to an advantageous aspect, the support elements 6 can be directly anchored to the columns or load-bearing walls P of the building, in the way that is illustrated in figure 11 and, more in detail, in figure 12.

In this figure, indeed, it is possible to see a load-bearing column P of the building 2 to which a beam T, which supports the platform 5, is directly fixed.

As already mentioned, instead of the beam T, it can be foreseen for there to be a column 31, that is made for example in reinforced concrete.

The beam T can be for example of the type made from steel, with a suitably shaped cross-section, or it can be made from another suitable material, without particular limitations.

The beam T is directly anchored to the upper surface of the load-bearing column P of the building 2 through connection means M.

The connection means M consist, for example, of bolted angular brackets, bolted plates or other similar elements that are suitable for making a head-to-head connection between the column P and the beam T.

Such a head-to-head connection can have coinciding axes or also inclined axes, in relation to the specific requirements.

The manufacturing process of the structure 1 according to the invention, in accordance with this last solution, and that can be applied to existing buildings 2, therefore, foresees a step for removing a portion F of the cover of the roof 3, as represented in figure 12.

The removal of the portion F occurs at the load-bearing column P - or at the portion of load-bearing wall - on which the support elements 6 of the platforms 5 need to be fixed, i.e. in this specific case the beam T.

Subsequently, it is then foreseen for there to be a step of positioning the beam T, or other equivalent element, for supporting the platforms 5 on the upper surface of the load-bearing column P, or of the preselected portion of load-bearing wall.

Following this it is foreseen for there to be a step of fixing the beam T to the upper surface of the load-bearing column P, or to the upper surface of the involved load-bearing wall.

The fixing occurs through connection means M of the type previously described.

As mentioned, the fixing can occur head-to-head, or also according to different connection modalities, in relation to the specific requirements.

Once the fixing of the beam T to the load-bearing column P or to the portion of load-bearing wall is finished, the process foresees a restoration step of the portion F of cover that was previously removed, as illustrated in figure 13.

In particular, in this restoration step it can be foreseen for there to be the installation of a suitable closing element E that can be removed when needed so as to carry out maintenance and/or cleaning operations, and the like.

The closing element E can comprise, for example, a metal plate, similar to a scuttle, which is provided with an opening A through which the profile of the beam T passes.

The closing element E, at the same time, in addition to allowing the beam T to pass through the roof 3, also ensures weather protection and allows inspection for maintenance or cleaning operations.

The process described can be repeated for all the beams T or columns 31 that support the platforms 5, making the structure 1 according to the invention practically and cost-effectively.

In another embodiment of the invention, illustrated in particular in the detail of figure 14, the aforementioned step of restoration of the covering portion F of the roof 3, which was removed so as to allow the beam T to be fixed, can be carried out in another way.

In particular, in this embodiment, at the removed portion F, a window W is made that makes it possible to install a staircase S for accessing the platforms 5.

The staircase S can be of any type suitable for the application.

For example, the staircase S can be straight with an intermediate stair-landing as illustrated in figure 14, or it can be a spiral staircase, with axis coinciding with that of the beam T, or of yet another type.

In such a way, the area of the cover of the roof 3 around the beam T is advantageously exploited to achieve the elements necessary to use the platforms 5. Such a window W can be used of course for any other use related to the use of the platforms 5.

For example it could also be used for connecting the lift of the building 2 onto the platforms 5 themselves. In general, the solutions described in figures 11-14 make it possible, starting from a set number of selected points in the load-bearing structure of the building 2, to erect the structure 1 according to the invention in a practical and cost-effective manner, with a minimum waste of material and of resources and minimising the modifications to the roof 3 of the building.

The solution can be applied to roofs 3 of any kind, and the choice of the points of support of the structure 1 depends upon various factors, such as the type of building 2, the type of roof 3, and others.

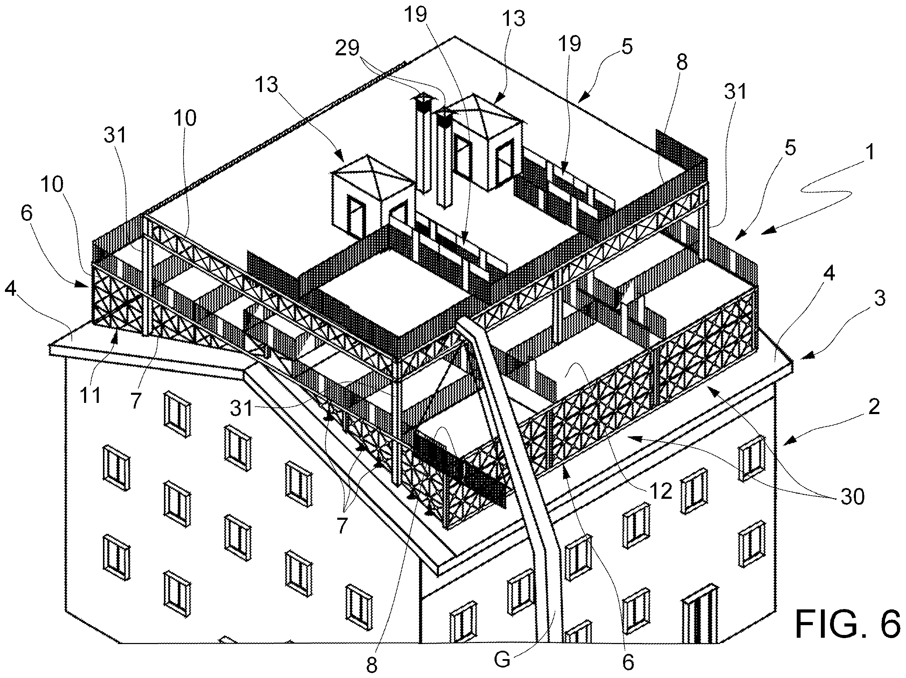

The described solution, as already mentioned, has the speciality of exploiting the direct connection of the structure 1 to existing columns and/or load-bearing walls P of the building 2 by partially removing and then restoring the cover of the roof 3, and, thanks to this, it can support loads and mezzanines of great dimensions which other known solutions - balconies, raised platforms, and the like are not able to support. Figure 6 represents an installation step of the structure 1 according to the embodiment of figure 5.

As shown, and as already mentioned, the installation of the majority of the components of the structure 1 occurs from outside, through cranes G or other similar means. Figure 6 shows a crane that is positioning the fence element 8 on one of the platforms 5: the fence element 8 is then fixed by the workers that are already present on the platforms 5.

This installation method of course refers to all the embodiments of the structure 1 illustrated in the present description.

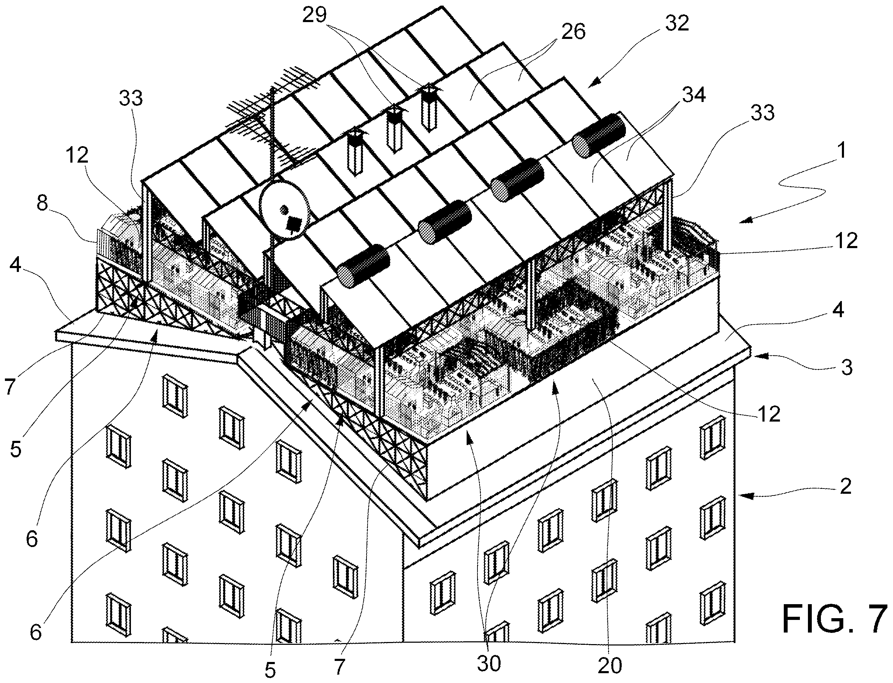

Figure 7 illustrates yet another embodiment of the structure 1 according to the present invention.

In this embodiment, the structure 1 comprises two platforms 5, one for each sloping surface 4 of the roof 3, arranged on the same floor.

Each platform 5 is then divided into various portions 12, according to already described criteria.

Covering panels 20 are foreseen at the support elements 6.

The structure 1 also comprises an upper cover 32.

The upper cover 32 is sustained by additional columns 33 which are supported by the platforms 5 of the structure 1.

The upper cover 32 can be complete, or also only partial, in relation to the different requirements.

The upper cover 32 can be provided with photovoltaic panels 26, panels for heating water 34, and other similar services and utilities.

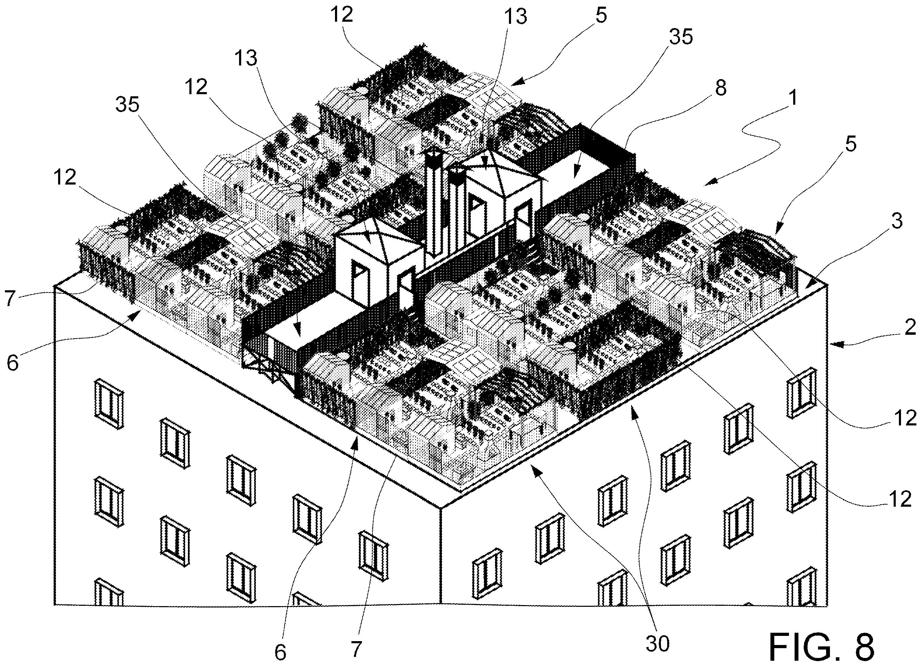

In such a way, the structure 1 is also exploited for producing electric energy and hot water both for the utilities foreseen on the platform 5, and for the utilities foreseen in the apartments of the building 2. The cover 32 can also be completely or partially closed by veranda structures for the months of winter, foreseeing possible heating installations, so as to keep a temperature that is suitable for the users. Another embodiment of the structure 1 according to the invention is illustrated in figure 8.

This embodiment is suitable for the installation on a building 2 having a flat roof 3.

In this case, therefore, the platforms 5 are all arranged on the same floor of the roof 3.

The support elements 6 of the platforms 5 and the means 7 for fixing them to the surface of the roof 3 are thus decisively simplified with respect to those foreseen in the previous embodiments.

For example, it is indeed not necessary for there to be lattice girders with inclined bases, but simple metal supports to be fixed directly to the flat surface of the roof 3 are sufficient, preferably at the load-bearing columns or load-bearing walls.

The various platforms 5 are then divided into respective portions 12 according to criteria that has already been mentioned.

The access points 13 to the platforms 12 can be made slightly raised with respect to the platforms 5, on respective additional platforms 35 foreseen in the central area of the roof 3.

The additional platforms 35 are provided with respective fences 8.

Also in this embodiment, the various platforms 5 are made up of various modules 30 - made up for example by single portions 12 or groups of portions 12 - that can be installed or dismounted separately, in relation to the different requirements.

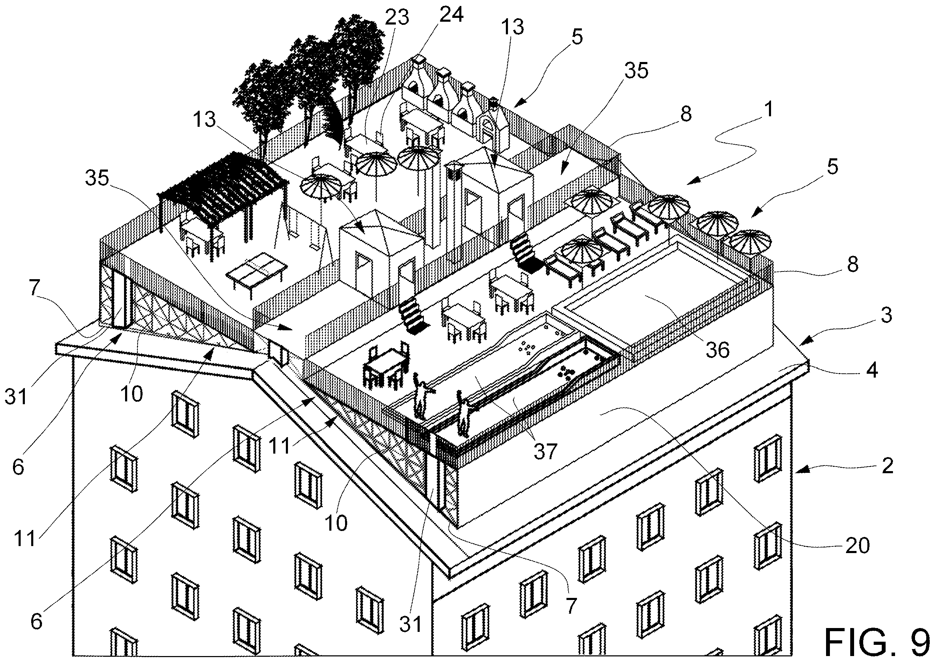

Another embodiment of the structure 1 according to the invention is represented in figure 9.

In this embodiment the structure 1 is mounted on a roof 3 with two sloping surfaces 4.

It is different mainly due to the fact that the platforms 5 are not divided into single portions intended for single tenants or groups of tenants, but are, on the other hand, totally intended for common recreational use of tenants of the building 2.

For example, in the aforementioned common recreational areas it can be foreseen for there to be a swimming pool 36, sport areas 37, areas with tables and chairs 23,24 for eating meals, playgrounds for children, and the like.

The invention thus conceived makes it possible to achieve important technical advantages.

As mentioned, firstly, the surface of the roof of a building is fully exploited, also in the case in which there is a building with pitched roofs, making it totally habitable and, actually, particularly enjoyable for free time and resting, for children to play, and even for further activities.

Moreover, areas are created that are particularly suitable for making vegetable plots, that cannot be made in known structures for creating grass lawns on roofs, which can be used at a few metres from ones dwellings and without requiring having to travel kilometres to get out of the residential area.

Of course, the vegetable plots provide food products, therefore the users can appreciate savings on the daily shopping.

As mentioned, the structure according to the invention is completely modular, and can indeed be made for installing single modules that are independent from one another, which can be freely mounted or dismounted without having to intervene on the entire structure itself.

The installation of single modules of the structure occurs practically entirely from outside the building, therefore without causing particular disturbance to the tenants.

Also the maintenance operations of the single modules are thus particularly simple and quick, as well as the possible operations of maintenance and of inspection of the surface of the underlying roof.

Another important advantage is that the structure according to the invention can be installed without particular difficulty on the roofs of existing buildings; alternatively, it can be easily foreseen also in designing new buildings.

The installation of the structure according to the invention on a building certainly leads to an appreciation thereof, since it comprises accessory spaces that can be completely used by the users and that can be compared to actual add-ons such as cellars, garages, car parks, and more.

It has thus been seen how the invention achieves the proposed purposes.

The present invention has been described according to preferred embodiments, but equivalent variants can be conceived without for this reason departing from the scope of protection offered by the following claims.

## Claims

1. Structure (1) to achieve green areas on building roofs, said building (2) comprising load-bearing columns or load-bearing walls (P), said structure (1) comprising
a plurality of substantially horizontal platforms (5) accessible to users,
support elements (6) of said platforms (5) in a substantially horizontal position,
means (7) for fixing said support elements (6) to the surface of the roof (3) of the building (2),
a plurality of fences (8) foreseen at the perimeters of said platforms (5)
**characterised in that**
said support elements (6) being directly anchored to the load-bearing columns or walls (P) of the building (2), and **in that** said support elements (6) comprise columns (31) or beams (T) supporting said platforms (5) and directly anchored to the upper surface of the load-bearing columns (P) or to the upper surface of the load-bearing walls through connection means (M).

2. Structure according to claim 1, wherein at least one portion of each of said platforms (5) is covered by a layer of soil (9) suitable for growing plants, used for example as a vegetable plot or garden.

3. Structure according to claims 1 or 2, wherein said platforms (5) are divided into single closed off portions (12) and each equipped with its own fence (8).

4. Structure according to any one of the previous claims, comprising at least one panel (20) for covering said support elements (6) suitable for giving to at least one of the sides of said structure (1) an appearance similar to that of the facades of the building (2), or another appearance, for example verdant.

5. Structure according to any one of the previous claims, wherein said support elements (6) comprise lattice girders (10) in metal, wood or other materials, and/or load-bearing structures in reinforced concrete or in masonry which project from the roof (3) and that constitute a base or predisposition for the installation of the structure.

6. Structure according to the previous claim, particularly for buildings (2) with roofs (3) with sloping surface (4), wherein said lattice girders (10) comprise respective inclined bases (11) for fixing to the surfaces of the sloping surfaces (4) of the roof (3).

7. Structure according to one of claims 3 to 6, wherein said platforms (5) or said portions (12) of said platforms (5) are positioned at different heights.

8. Structure according to the previous claim, wherein some of said platforms (5) or portions (12) of platforms (5) are completely placed over other platforms (5) or portions (12) of platforms (5).

9. Structure according to any one of the previous claims, wherein said platforms (5) comprise single prefabricated modules (30) that can be installed autonomously.

10. Structure according to the previous claim, wherein each of said modules (30) comprises one or more portions (12) of said platforms (5).

11. Structure according to any one of the previous claims, comprising at least one access point (13) to said platforms (5) connected to the stairwell (14) or to the lift shaft.

12. Structure according to the previous claim, wherein said access point (13) comprises a cabin (17) placed on the surface of the roof (3) and at least one staircase (16) for connecting to the stair-landing (15) of the last floor of the building (2), said cabin (17) being provided with one or more exit doors (18) for accessing the respective platform (5), through a certain path (19) provided with respective fences (8).

13. Structure according to one of claims 3-12, wherein each of said platforms (5) or portions (12) comprises a flat base (27) with side edges (28) suitable for containing a layer of soil (9).

14. Process for manufacturing a structure (1) to achieve green areas on a roof (3) of an existing building (2), said building (2) comprising load-bearing columns or load-bearing walls (P), said structure (1) comprising a plurality of substantially horizontal platforms (5) accessible to users, support elements (6) of said platforms (5) in a substantially horizontal position, said support elements (6) comprising beams (T), means (7) for fixing said support elements (6) to the surface of the roof (3) of the building (2), and a plurality of fences (8) foreseen at perimeters of said platforms (5), **characterised in that** it comprises the steps of
removing a portion (F) of the cover of the roof (3) at the load-bearing column (P), or at the portion of loading-bearing wall, on which a beam (T) need to be fixed,
positioning said beam (T) on the upper surface of the load-bearing column (P), or of the preselected portion of the load-bearing wall,
fixing said beam (T) to the upper surface of the load-bearing column (P), or to the upper surface of the involved load-bearing wall, through connection means (M).

15. Process according to claim 14, comprising a step of restoring the portion (F) of the cover that was previously removed, said step of restoring comprising installing a suitable closing element (E) that can be removed when needed so as to carry out maintenance and/or cleaning operations.

## Patentansprüche

1. Struktur (1) zur Schaffung von Grünflächen auf Gebäudedächern, das besagte Gebäude (2) umfassend lasttragende Säulen oder lasttragende Wände (P), die besagte Struktur (1) umfassend
eine Vielzahl von im Wesentlichen den Nutzern zugänglichen horizontalen Plattformen (5),
Tragelemente (6) der besagten Plattformen (5) in einer im Wesentlichen horizontalen Position,
Mittel (7) zum Befestigen der besagten Tragelemente (6) an der Oberfläche des Dachs (3) des Gebäudes (2),
eine Vielzahl von Zäunen (8), die an den Umfängen der besagten Plattformen (5) vorgesehen sind,
**dadurch gekennzeichnet, dass**
die besagten Tragelemente (6) direkt verankert sind an den lasttragenden Säulen oder Wänden (P) des Gebäudes (2)
und
dadurch, dass die besagten Tragelemente (6) Säulen (31) oder Balken (T) zum Tragen der besagten Plattformen (5) umfassen und direkt verankert sind an der Oberseite der lasttragenden Säulen (P) oder an der Oberseite der lasttragenden Wände durch Verbindungsmittel (M).

2. Struktur nach Anspruch 1, worin mindestens ein Abschnitt von jeder der besagten Plattformen (5) mit einer Erdschicht (9) bedeckt ist, die zum Anbau von Pflanzen geeignet ist, beispielsweise zur Verwendung als Gemüsebeet oder Garten.

3. Struktur nach Anspruch 1 oder 2, worin die besagten Plattformen (5) in einzelne abgeschlossene Abschnitte (12) unterteilt sind und von denen jeder mit seinem eigenen Zaun (8) ausgestattet ist.

4. Struktur nach irgendeinem der vorangegangenen Ansprüche, umfassend mindestens eine Platte (20) zum Abdecken der besagten Tragelemente (6), die geeignet sind, mindestens einer der Seiten der besagten Struktur (1) ein Aussehen zu verleihen, dass dem der Fassaden des Gebäudes (2) ähnlich ist, oder ein anderes Aussehen, zum Beispiel grün.

5. Struktur nach irgendeinem der vorangegangenen Ansprüche, worin die besagten Tragelemente (6) Gitterträger (10) aus Metall, Holz oder anderen Materialien und/oder lasttragende Strukturen aus Stahlbeton oder aus Mauerwerk umfassen, die vom Dach (3) vorstehen und die eine Basis oder Vorbereitung für die Installation der Struktur darstellen.

6. Struktur nach dem vorangehenden Anspruch, insbesondere für Gebäude (2) mit Dächern (3) mit Schrägfläche (4), worin die besagten Gitterträger (10) jeweilige geneigte Basen (11) zum Befestigen an den Oberflächen der Schrägflächen (4) des Dachs (3) umfassen.

7. Struktur nach einem der Ansprüche 3 bis 6, worin die besagten Plattformen(5) oder die besagten Abschnitte (12) der besagten Plattformen (5) auf verschiedenen Höhen angeordnet sind.

8. Struktur nach dem vorangehenden Anspruch, worin einige der besagten Plattformen (5) oder Abschnitte (12) der Plattformen (5) vollkommen über anderen Plattformen (5) oder Abschnitten (12) der Plattformen (5) angeordnet sind.

9. Struktur nach irgendeinem der vorangegangenen Ansprüche, worin die besagten Plattformen (5) einzelne vorgefertigte Module (30) umfassen, die selbstständig installiert werden können.

10. Struktur nach dem vorangehenden Anspruch, worin jedes der besagten Module (3) einen oder mehrere Abschnitte (12) der besagten Plattformen (5) umfasst.

11. Struktur nach irgendeinem der vorangegangenen Ansprüche, umfassend mindestens einen Zugangspunkt (13) zu den besagten Plattformen (5), der mit dem Treppenhaus (14) oder mit dem Aufzugsschacht verbunden ist.

12. Struktur nach dem vorangehenden Anspruch, worin der besagte Zugangspunkt (13) eine Kabine (17), angeordnet auf der Oberfläche des Dachs (3), und mindestens eine Treppe (16) zur Verbindung mit dem Treppenabsatz (15) des letzten Stockwerks des Gebäudes (2) umfasst, die besagte Kabine (17) versehen ist mit einer oder mehreren Ausgangstüren (18) für den Zugang zur jeweiligen Plattform (5) durch einen bestimmten Weg (19), der mit jeweiligen Zäunen (8) versehen ist.

13. Struktur nach einem der Ansprüche 3 - 12, worin jede der besagten Plattformen (5) oder jeder der Abschnitte (12) eine flache Basis (27) mit Seitenkanten (28) umfasst, die für die Aufnahme einer Erdschicht (9) geeignet ist.

14. Verfahren zur Herstellung einer Struktur (1) zur Schaffung von Grünflächen auf einem Dach (3) eines bestehenden Gebäudes (2), das besagte Gebäude (2) umfassend lasttragende Säulen oder lasttragende Wände (P), die besagte Struktur (1) umfassend eine Vielzahl von im Wesentlichen den Nutzern zugänglichen horizontalen Plattformen (5), Tragelemente (6) der besagten Plattformen (5) in einer im Wesentlichen horizontalen Position, die besagten Tragelemente (6) umfassend Balken (T), Mittel (7) zum Befestigen der besagten Tragelemente (6) an der Oberfläche des Dachs (3) des Gebäudes (2), und eine Vielzahl von Zäunen (8), die an den Umfängen der besagten Plattformen (5) vorgesehen sind, **dadurch gekennzeichnet, dass** es die Schritte zum
Entfernen eines Abschnitts (F) der Abdeckung des Dachs (3) an der lasttragenden Säule (P) oder an dem Abschnitt der lasttragenden Wand, an der ein Balken (T) befestigt werden soll, umfasst,
Positionieren des besagten Balkens (T) an der Oberseite der lasttragenden Säule (P) oder an dem vorbestimmten Abschnitt der lasttragenden Wand,
Befestigen des besagten Balkens (T) an der Oberseite der lasttragenden Säule (P) oder an der Oberseite der betreffenden lasttragenden Wand durch Verbindungsmittel (M).

15. Verfahren nach Anspruch 14, umfassend einen Schritt zur Wiederherstellung des Abschnittes (F) der Abdeckung, der zuvor entfernt wurde, der besagte Schritt zur Wiederherstellung umfassend das Installieren eines geeigneten Schließelements (E), das bei Bedarf entfernt werden kann, um Instandhaltungs- und/oder Reinigungsarbeiten auszuführen.

## Revendications

1. Structure (1) destinée à obtenir des zones vertes sur des toits de bâtiment, ledit bâtiment (2) comprenant des colonnes porteuses ou des murs porteurs (P), ladite structure (1) comprenant
une pluralité de plates-formes (5) sensiblement horizontales accessibles aux utilisateurs,
des éléments de support (6) desdites plates-formes (5) dans une position sensiblement horizontale,
des moyens (7) pour fixer lesdits éléments de support (6) sur la surface du toit (3) du bâtiment (2),
une pluralité de barrières (8) prévues à la périphérie desdites plates-formes (5)
**caractérisé en ce que**
lesdits éléments de support (6) sont directement fixés aux colonnes porteuses ou murs porteurs (P) du bâtiment (2),
et
**en ce que** lesdits éléments de support (6) comprennent des colonnes (31) ou des poutres (T) supportant lesdites plates-formes (5) et directement fixées sur la surface supérieure des colonnes porteuses (P) ou sur la surface supérieure des murs porteurs par l'intermédiaire de moyens de raccordement (M).

2. Structure selon la revendication 1, dans laquelle une ou plusieurs parties de chacune desdites plates-formes (5) est recouverte d'une couche de terre (9) adaptée à la croissance de plantes, utilisée par exemple comme un potager ou un jardin.

3. Structure selon les revendications 1 ou 2, dans laquelle lesdites plates-formes (5) sont divisées en parties individuelles fermées (12) et chacune est dotée de sa propre barrière (8).

4. Structure selon l'une quelconque des revendications précédentes, comprenant un ou plusieurs panneaux (20) pour couvrir lesdits éléments de support (6), adaptés pour donner à un ou plusieurs côtés de ladite structure (1) un aspect similaire à celui des façades du bâtiment (2), ou un autre aspect, par exemple verdoyant.

5. Structure selon l'une quelconque des revendications précédentes, dans laquelle lesdits éléments de support (6) comprennent des poutres-treillis (10) en métal, en bois ou dans une autre matière, et/ou des structures porteuses en béton armé ou en maçonnerie saillantes du toit (3) et constituant une base ou une préparation pour l'installation de la structure.

6. Structure selon la revendication précédente, particulièrement destinée aux bâtiments (2) dotés de toits (3) à la surface pentue (4), dans laquelle lesdites poutres-treillis (10) comprennent des bases inclinées (11) respectives pour la fixation aux surfaces pentues (4) du toit (3).

7. Structure selon l'une des revendications 3 à 6, dans laquelle lesdites plates-formes (5) ou lesdites parties (12) desdites plates-formes (5) sont positionnées à différentes hauteurs.

8. Structure selon la revendication précédente, dans laquelle une partie desdites plates-formes (5) ou parties (12) de plates-formes (5) sont totalement placées au-dessus d'autres plates-formes (5) ou parties (12) de plates-formes (5).

9. Structure selon l'une quelconque des revendications précédentes, dans laquelle lesdites plates-formes (5) comprennent des modules préfabriqués individuels (30) pouvant être installés de manière autonome.

10. Structure selon la revendication précédente, dans laquelle chacun desdits modules (30) comprennent une ou plusieurs parties (12) desdites plates-formes (5).

11. Structure selon l'une quelconque des revendications précédentes, comprenant un ou plusieurs points d'accès (13) auxdites plates-formes (5) reliés à la cage d'escalier (14) ou à la cage d'ascenseur.

12. Structure selon la revendication précédente, dans laquelle lesdits points d'accès (13) comprennent une cabine (17) placée sur la surface du toit (3) et un ou plusieurs escaliers (16) pour le raccordement au palier d'escalier (15) du dernier étage du bâtiment (2), ladite cabine (17) étant dotée d'une ou de plusieurs portes de sortie (18) pour accéder à la plate-forme (5) respective, par l'intermédiaire d'un trajet (19) sûr doté de barrières (8) respectives.

13. Structure selon l'une des revendications 3 à 12, dans laquelle chacune desdites plates-formes (5) ou parties (12) comprend une base plate (27) avec des bords latéraux (28) adaptés pour contenir une couche de terre (9).

14. Procédé de fabrication d'une structure (1) pour obtenir des zones vertes sur un toit (3) d'un bâtiment (2) existant, ledit bâtiment (2) comprenant des colonnes porteuses ou des murs porteurs (P), ladite structure (1) comprenant une pluralité de plates-formes (5) sensiblement horizontales accessibles aux utilisateurs, des éléments de support (6) desdites plates-formes (5) dans une position sensiblement horizontale, lesdits éléments de support (6) comprenant des poutres (T), des moyens (7) de fixation desdits éléments de support (6) sur la surface du toit (3) du bâtiment (2), et une pluralité de barrières (8) prévues à la périphérie desdites plates-formes (5), **caractérisé en ce qu'**il comprend les étapes destinées à retirer une partie (F) de la couverture du toit (3) sur la colonne porteuse (P), ou sur la partie de mur porteur, sur laquelle une poutre (T) doit être fixée, positionner ladite poutre (T) sur la surface supérieure de la colonne porteuse (P), ou de la partie présélectionnée du mur porteur, en fixant ladite poutre (T) à la surface supérieure de la colonne porteuse (P), ou à la surface supérieure du mur porteur impliqué, par des moyens (M) de raccordement.

15. Procédé selon la revendication 14, comprenant une étape de restauration de la partie (F) de couverture précédemment retirée, ladite étape de restauration comprenant l'installation d'un élément de fermeture (E) adapté pouvant être retiré si nécessaire afin de réaliser des opérations d'entretien et/ou de nettoyage.
